# EUROPEAN PATENT APPLICATION

(11) **EP 1 407 866 A1**
(43) Date of publication of application: **14.04.2004**
(21) Application number: 02741273.3
(22) Date of filing: 24.06.2002
(51) Int. Cl.: B29C 39/26

(54) **FORMING MOLD FOR CONTACT LENS, AND METHOD OF MANUFACTURING CONTACT LENS BY USING THE FORMING MOLD**

(30) Priority: 27.06.2001 JP 2001195341
(71) Applicant: MENICON CO., LTD., Nagoya-shi, Aichi 460-0006 (JP)
(72) Inventor: TOGO, Motonobu, c/o MENICON CO., LTD., Kakamigahara-shi, Gifu 509-0108 (JP); OYAMA, Hiroyuki, c/o MENICON CO., LTD., Kasugai-shi, Aichi 487-0032 (JP); ICHIKAWA, Seiichi, c/o MENICON CO., LTD., Kakamigahara-shi, Gifu 509-0108 (JP)
(74) Representative: Senior, Alan Murray
(86) International application number: PCT/JP2002/006309
(87) International publication number: WO 2003/002322

(57) **Abstract**

It is an object of the present invention to provide a contact lens mold unit that is capable of easily and consistently provides a sealing in a mold cavity as well as a mating and fixing force to maintain a male and a female mold in a mated state. A male mold and a female mold are mated to form a contact lens mold cavity 16 between abutment surfaces thereof. One mold 14 is provided with a fitting projection 42 projected out from a fitting wall 34. When mating the molds, the fitting projection 42 is caused to deform by being pressed against a fitting wall 22 of the other mold 12, whereby the peripheral portion of the mold cavity 16 is closed off, and a gap 14 between the fitting walls 22, 34 of the female and male molds 12, 14 are filled by the fitting projection, exerting a mating and fixing force.

## Description

### TECHNICAL FIELD

The present invention relates generally to a contact lens mold unit for use in manufacturing a contact lens by a molding process, as well as to a method of manufacturing a contact lens by using this mold. More particularly, the present invention is concerned with such a contact lens mold unit capable of providing stable closure at a lens edge portion in a mold cavity as well as a consistent level of mating and fixing force of a male and female mold so as to permit a consistent molding of a desired contact lens, and a method of manufacturing a contact lens by using this mold unit.

### BACKGROUND ART

A molding method is known as one type of manufacturing methods usable for either hard contact lenses or soft contact lenses. According to the molding method, a female mold having a concave molding surface and a male mold having a convex molding surface are mated together to form in a gap therebetween a mold cavity whose profile corresponds to that of a desired contact lens. A lens molding material consisting of a predetermined polymerizable material is supplied to fill the mold cavity, and then polymerized in the cavity, thus producing a contact lens of shape corresponding to that of the molding cavity. As compared to other known methods of manufacturing contact lenses, such as lathe cutting process (cutting and polishing method) or spin casting process (centrifugal injection method), the molding method permits a mass production of desired contact lenses at lower cost. For this reason, the molding method has been preferably employed in manufacturing disposable contact lenses, or the like.

In the molding method, abutment surfaces of the male and female molds are situated at an edge portion of a periphery of the lens. In order to reduce or avoid occurrence of burrs or other molding defects in molded articles in the form of contact lenses, it is important to consistently maintain a state of closure at the periphery of the mold cavity defining the edge portion of the contact lens. In addition, since typical procedure is to transport the mated male and female molds filled with polymerizable material to a polymerization apparatus where the material is subjected to ultraviolet irradiation or heat, it is desirable for the male and female molds to be held securely in a mated state, so as to afford consistency in the molding process following mating.

To meet this demand, it has been proposed to form an annular edge portion or rim projection at the peripheral edge of the mold cavity on either mold, as disclosed in JP-A-2-270517, JP-B-6-20761, JP-A-6-510496 and JP-B-3035673, for example. The annular edge portion or rim projection is brought into abutting contact with the other mold in the axial direction, thereby providing closure to the periphery of the mold cavity, as well as forming cylindrical inner and outer walls on the male and female molds, both situated diametrically outside the mold cavity area. The inner and outer walls are press fit together so that the male and female molds are held in the mated state.

However, it is difficult for the mold unit of aforesaid conventional design having the annular edge portion or rim projections, to provide consistent closure at the periphery of the mold cavity. Namely, slight tilting of the male and female molds relative to each other may possibly cause formation of a gap between the annular edge portion and an abutment surface to which the annular edge portion is brought into contact, or bending back of the distal edge of the annular rim projection so that the distal edge projects back into the mold cavity and the molded article. Thus, adequate stability of molding has not achieved yet.

In addition, the mold unit of conventional design needs high precise dimensional accuracy of the male and female molds in order to generate consistently a mating force adequate to hold the male and female molds in the mated state, making it difficult to manufacture the mold unit. More specifically, dimensional errors in the male and female molds makes it easy for the male and female molds to come apart from each other, possibly causing adverse effects on the contact lens molding operation. While a high level of mating and fixing force may be used to prevent the molds from disengaging, but this may leads to the risk of excessive pressing force being applied to the male and female molds. The contact lens molding surfaces may possibly deformed, making it considerably difficult to ensure dimensional accuracy of the mold unit.

The present invention has been developed in view of the foregoing situation, and it is an object of the present invention to provide a contact lens mold unit of novel design, which is capable of: closing a mold cavity in consistent fashion when mating the molds; generating a consistent level of mating and fixing force exerted on the male and female molds; and accordingly carrying out molding of a desired contact lens in consistent fashion. It is another object of the invention to provide a contact lens manufacturing method using the mold unit.

### DISCLOSURE OF THE INVENTION

The modes of the invention for solving the problems mentioned above are set forth hereinbelow. Elements employed in each mode described herein may be employed in any possible combination. It is to be understood that the modes and technical features of the invention are not limited to those disclosed herein, but may otherwise be recognized based on the teachings of the present invention disclosed in the entire specification and drawings or that may be recognized based on concept of the invention recognized by those skilled in the art in the light of the present disclosure.

The present invention, in an aspect thereof relating to a contact lens mold unit, provides a contact lens mold unit comprising: a female mold with a concave molding surface; a male mold with a convex molding surface, the female and male molds cooperating to form a contact lens mold cavity between abutment surfaces thereof; and cylindrical fitting walls formed at a peripheral portion of the convex molding surface of the male mold and a peripheral portion of the concave molding surface of the female mold, respectively, both extending towards one side in an axial direction, the cylindrical fitting walls being fitted together with a gap therebetween in a diametric direction when the male and female molds are mated, wherein one of the male and female molds whose cylindrical fitting wall fitted inside is provided at a peripheral edge of the convex or concave molding surface thereof with a fitting projection that projects out and extends continuously about an entire circumference thereof so that, when mating the male and female molds, the fitting projection comes into abutment with a peripheral side of the convex or concave molding surface of an other one of the male mold and the female mold whose cylindrical fitting wall fitted outside, and undergoes deformation due to force of mating, and so that a peripheral portion of the mold cavity is sealed off by the fitting projection, and the gap in the diametric direction between the cylindrical fitting walls fitted inside and outside is filled by the fitting projection, in order to produce mating and fixing force exerted on the male and female molds.

In the contact lens mold unit constructed according to the present invention, the fitting projection is formed at a specific area of either the male or female mold. When the molds are mated, this fitting projection actively undergoes deformation by coming into abutment with the outer peripheral edge of the mold cavity on the opposing mold, thereby sealing off the outer peripheral portion of the mold cavity, as well as filling the gap between the fitting walls of the male and female molds to produce mating and fixing force.

Accordingly, when mating the male and female molds, there is no need to apply a level of force of mating high enough to induce deformation of areas providing molding surfaces of the male and female molds, and the outside peripheral portion of the mold cavity can easily and consistently be closed off, while advantageously obtaining mating and fixing force for holding the male and female molds in the mated state. Thus, a desired contact lens can be manufactured consistently with a high degree of dimensional precision and excellent productivity.

The fitting projection employed in the contact lens mold unit according to the present invention may be advantageously embodied, for example, by (a) designing the fitting projection as a thin-walled fin of flat annular form that extends outwardly from a rising edge portion of one cylindrical fitting wall formed at the outer peripheral edge of the convex molding surface of the male mold or concave molding surface of the female mold, the thin-walled fin, when the male and female molds are mated, deflecting rearward in a mating direction of both molds towards an opposing side of the mold cavity and being pressed in close contact with an inner circumferential surface of the other cylindrical fitting wall that is fitted outside. Alternatively, the fitting projection may be advantageously embodied by (b) designing the fitting projection with a sharp-angled projecting distal edge that projects in the axial direction and/or outward in the diametrical direction from a rising edge portion of the cylindrical fitting wall fitted inside at the outer peripheral edge of the convex molding surface of the male mold or concave molding surface of the female mold, and the cylindrical fitting wall fitted outside is provided at an inner circumferential surface thereof with a sloped abutment surface, the projecting distal edge coming into abutment with the sloped abutment surface when mating the male and female molds and being deformed in close contact with the sloped abutment surface through the mating and fixing forced.

In the case of the former design (a), it is advantageous to employ a design wherein the thin-walled fin projects sloping rearward in a fitting direction of the cylindrical fitting walls of the male and female molds, thereby facilitating and stabilizing flexural deformation of the thin-walled fin. Therefore, the former design (a) improves ease of operation when mating the male and female molds, and also improves consistency of the centering action exerted on the male and female molds by the thin-walled fin. The thickness dimension of the thin-walled fin will depend on the type of material and size of the gap formed between the inside and outside fitting walls of the male and female molds. Where fabricated of synthetic resin material such as polypropylene or polyethylene, the thickness dimension of the thin-walled fin is preferably 0.005-0.05 mm. Namely, if the thin-walled fin is too thin, it becomes difficult to form consistently, and may tend to break due to lack of strength, whereas if it is too thick, the thin-walled fin will resist deforming and will not easily insert into the gap between the inside/outside fitting walls of the male and female molds, resulting in a difficult operation when registering the male and female molds.

In the contact lens mold unit provided with such a thin-walled fin, it is advantageous to employ a design wherein the male or female mold provided with the thin-walled fin is formed by combining a plurality of combination molds, with the mold parting faces of the plurality of combination molds disposed at a distal end portion in a direction in which the thin-walled fin projects so that the convex or concave molding surface of the male or female mold with the thin-walled fin is constituted by one of the combination molds. By employing such a combination mold structure, the thin-walled fin can be formed advantageously, and the mold combination faces is no longer present on the molding surfaces, so that molding defects caused by mold parting faces are avoided.

In the case of the latter design (b), one of the molds is provided with the fitting projection having a sharp-angled projecting distal edge, and this sharp-angled projecting distal edge comes into abutment with the sloped abutment surface formed on the other mold to be mated. This is extremely advantageous in terms of ability of the fitting projection to undergo deformation by force of mating, whereby the male and female molds are maintained in close contact and securely mated. An additional advantage is that it is possible by adjusting projection distance in the axial direction and projection distance in the diametric direction of the fitting projection having the sharp-angled projecting distal edge to appropriately adjust the shape of the peripheral edge of the contact lens mold cavity, in other words, the shape of the contact lens edge. The sharp-angled projecting distal edge of the fitting projection may optionally be subjected to an "R" shaped chamfering or cut shape chamfering process, or the like.

In the contact lens mold unit constructed according to the present invention, it is preferable to employ a design wherein the peripheral portion of the convex molding surface constituting a lens edge molding surface is provided with a shoulder portion that is convex towards a side at which a radius of curvature of the convex molding surface is situated, and wherein the fitting projection is formed on a corner of the shoulder portion. By forming such a shoulder portion, the edge portion of the contact lens may be given a smooth shape, and is possible to advantageously manufacture a contact lens with excellent wear comfort.

In the contact lens mold unit constructed according to the present invention, it is preferable that a gap of 0-0.1 mm in the diametric direction is formed between the cylindrical fitting wall fitted inside and the cylindrical fitting wall fitted outside, with the male mold and the female mold held in the mated state for forming the mold cavity for the object contact lens. Namely, if the size of the gap is less than 0, the procedure of mating the inner and outer fitting walls during mating of the male and female molds becomes difficult, and there is a likelihood of poor expulsion of air or excess material from the mold cavity during mating. Additionally, due to dimensional error upon molding, the molds may be subjected to heavy load during mating, leading to the risk of deformation of the contact lens molding surfaces and resultant lower molding precision. On the other hand, where the gap is greater than 0.1 mm, deviation in the extent of deformation of the fitting projection may result in appreciable deviation in the shape of the edge of the molded article, i.e., the contact lens, making it difficult to assure satisfactory molding precision, as well as making it difficult to achieve a stable level of mating and fixing force of the male and female molds, due to inconsistent filling of the gap between the fitting projections.

In the contact lens mold unit constructed according to the present invention, it is further possible that an inner circumferential surface of the cylindrical fitting wall that is fitted outside when the male and female molds are mated has a tapered cylindrical sloped surface at least in an area thereof into which the fitting projection comes into abutment at the outer peripheral portion of the convex or concave molding surface, the tapered cylindrical sloped surface constricting in diameter gradually towards the molding surface. By producing such a cylindrical sloped surface on the inner circumferential surface of the outside cylindrical fitting wall, when the male and female molds are mated, it is possible to induce deformation by means of more effective abutting force exerted on the fitting projection of formed on the inside cylindrical fitting wall. This makes it possible to more advantageously achieve closure at the peripheral edge of the mold cavity, and mating/fixing of the male and female molds through filling of the gap between the inner and outer fitting walls. Preferably, the slope angle of the tapered cylindrical sloped surface abutted by the fitting projection is 45° or less, more preferably 20° or less, with respect to a center axis thereof. Namely, if the slope angle of the sloped surface is too large, slope angle error may have adverse effects on the lens shape, or molding precision may be diminished due to the fitting projection coming into abutment with the sloped surface before reaching the desired abutting location.

In the contact lens mold unit constructed according to the present invention, it is preferable to employ a design wherein the cylindrical fitting wall that is fitted outside when the male and female molds are mated, expands in size at an open end portion of the inner circumferential surface thereof towards the opening to form a fitting guide surface for guiding the cylindrical fitting wall fitted inside when the male and female molds are mated in the mated direction. The provision of such a fitting guide surface makes it easy to mate the male and female molds, so that ease of operation in the molding process may be improved.

In the contact lens mold unit constructed according to the present invention, it is possible for the male and female molds that the cylindrical fitting wall that is fitted outside when the male and female molds are mated, and the fitting projection brought into abutment with the cylindrical fitting wall are fabricated of mutually different materials. In particular, it is preferable for the fitting projection to be formed of material that more readily deforms than the cylindrical fitting wall abutted by the fitting projection. With this arrangement, the fitting projection can be induced to more consistently deform to the desired shape, and dimensional error produced in the mold cavity as a result of unnecessary deformation of the female mold can be reduced or avoided.

In the contact lens mold unit constructed according to the present invention, it is possible to employ stopper means for relatively prescribing registration location of male and female molds, thereby stabilizing the state of deformation of the fitting projection during registration of the male and female molds, and stabilizing the desired shape of the mold cavity between the abutment surface of the male and female molds, with a high degree of precision and stability.

In a contact lens mold unit constructed according to the present invention, a material for the male and female molds may be appropriately selected from among materials having rigidity and strength adequate to withstand the contact lens forming operation in the mold cavity, e.g. various synthetic resins or metals, glass, or ceramic. Where the fitting projection is integrally formed with the male mold, in order to assure adequate strength and ready deformation on the part of the fitting projection, it is preferable for at least the male mold to be fabricated of synthetic resin or soft metal. The material for the male mold is preferably, for example, polypropylene, polyethylene, polyethylene terephthalate, polystyrene, polycarbonate, polyvinyl chloride, polyamide, polyacetal, fluororesin, or other such thermoplastic or thermosetting resin; or aluminum alloy, copper, gold, silver, or other metal.

In the contact lens mold unit constructed according to the present invention, it is effective to employ a known process for adjusting mold release properties in order to consistently have the molded contact lens adhere to either the male or female mold when the molds are parted after molding the contact lens. Examples of such process include, for example, subjecting the molding surfaces of either the male or female mold, or both, to high frequency glow discharge treatment, corona discharge treatment, ultraviolet irradiation treatment, atmospheric pressure plasma treatment, or the like, as well as a molding surface treatment using an adhesive exhibiting eliminable adhesive force. By designating the mold to which the molded contact lens will adhere when the molds are parted, the process of demolding the contact lens and other such post-molding operations is facilitated.

The present invention, in another aspect thereof relating to a contact lens manufacturing method, provides a method of manufacturing a contact lens using a contact lens mold unit constructed according to the invention set forth hereinabove, wherein the contact lens is manufactured by mating the male mold and the female mold and polymerizing a predetermined polymerizable material filling the mold cavity formed between the abutment surfaces of the male and female molds, the method comprising the following step: mating the male mold and female mold so that the fitting projection projected from the cylindrical fitting wall fitted inside is caused to deform by being pressed against the cylindrical fitting wall fitted outside, thereby providing closure in the peripheral portion of the mold cavity, fitting the gap in the diametric direction between the fitting wall fitted inside and the fitted wall fitted outside, and exerting mating and fixing force on the male and female molds.

According to the method of the present invention, when mating the male and female molds, the fitting projection provided to one of the molds is caused to undergo active deformation by being pressed against the other mold at the outer peripheral edge of the mold cavity, thereby providing closure in the peripheral portion of the mold cavity, and filling the gap between the fitting walls of the male and female molds. As a result, it is possible to seal closed the mold cavity by means of a low level of force of mating so as to be able to consistently manufacture contact lenses free from burrs or other molding defects, as well as to advantageously produce mating and fixing force sufficient to maintain the male and female molds in the mated state, so that excellent productivity may be achieved through improved mold handling during subsequent polymerization and other operations.

In the method of manufacturing a contact lens according to the present invention, the force of mating exerted on the male and female molds is preferably 1 N -300 N, when mating the male and female molds to form the mold cavity in a sealed state, and fix the male and female molds in the mated state. This avoids deformation of the contact lens forming areas of the male and female molds, while advantageously deforming the fitting projection formed on the male or female mold to the desired shape.

### BRIEF DESCRIPTION OF THE DRAWINGS

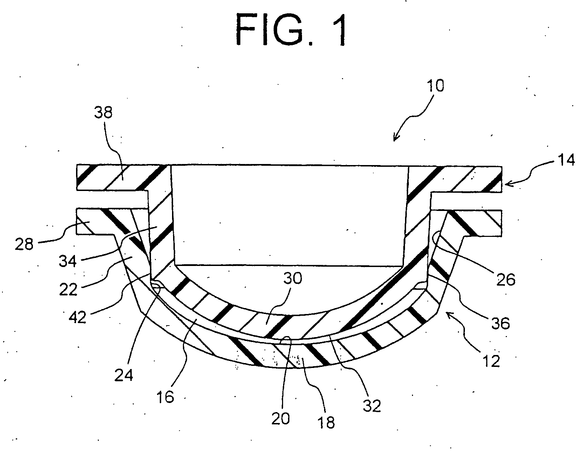

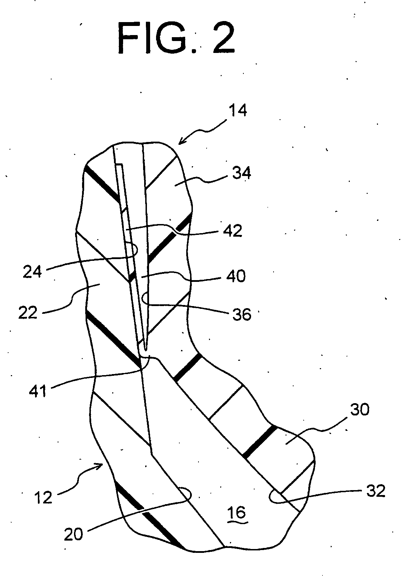

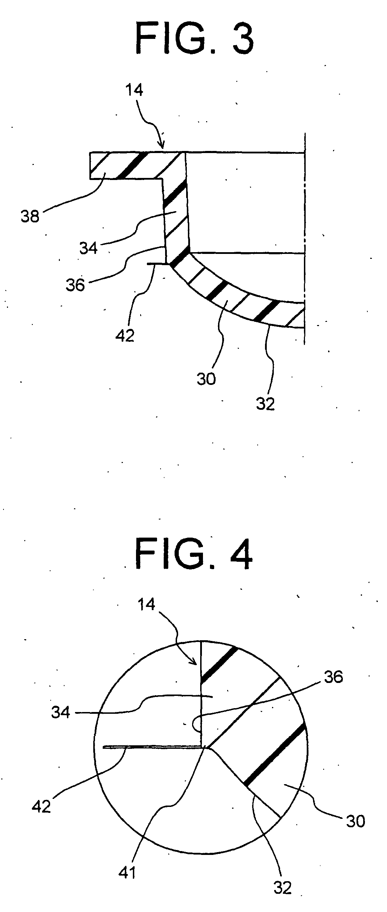

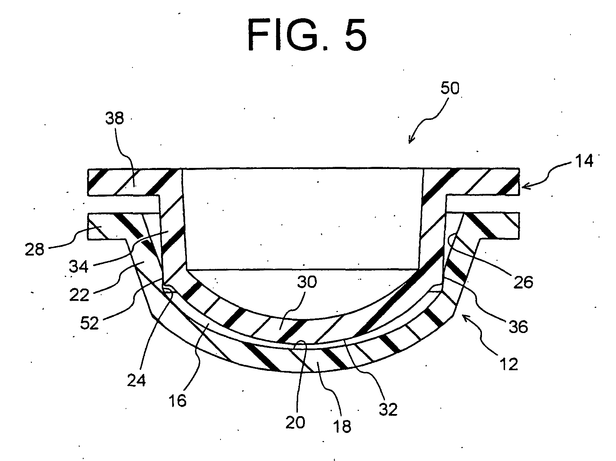

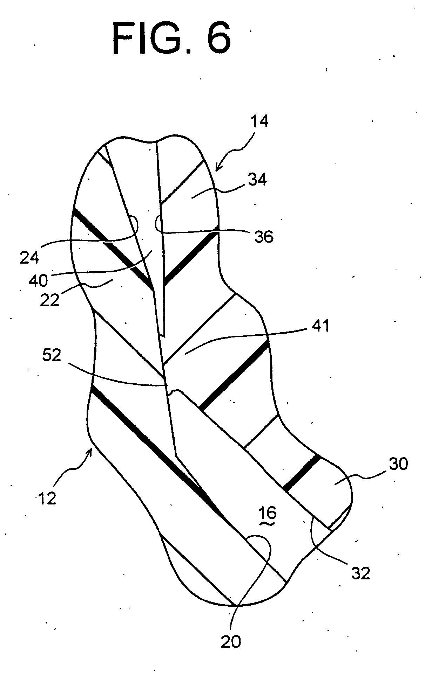

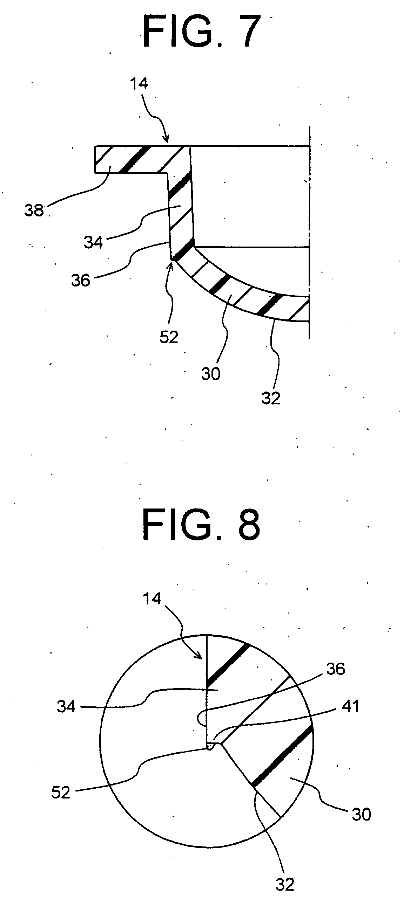

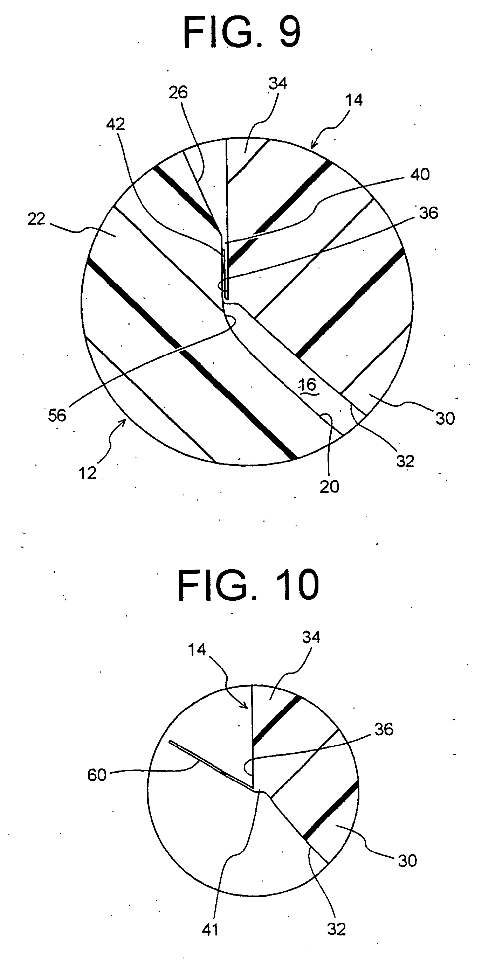

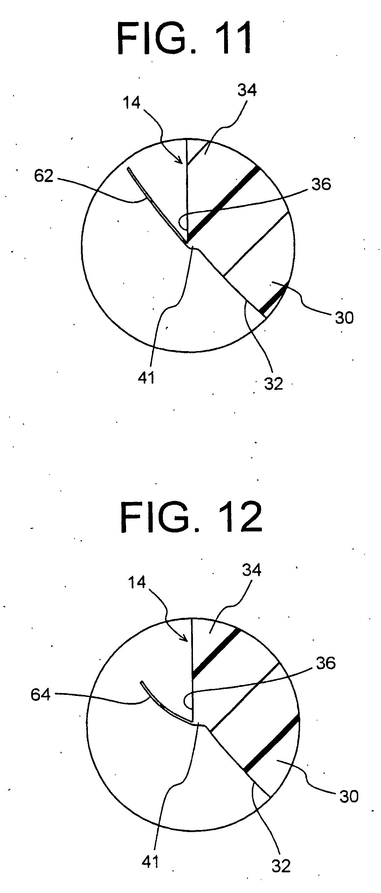

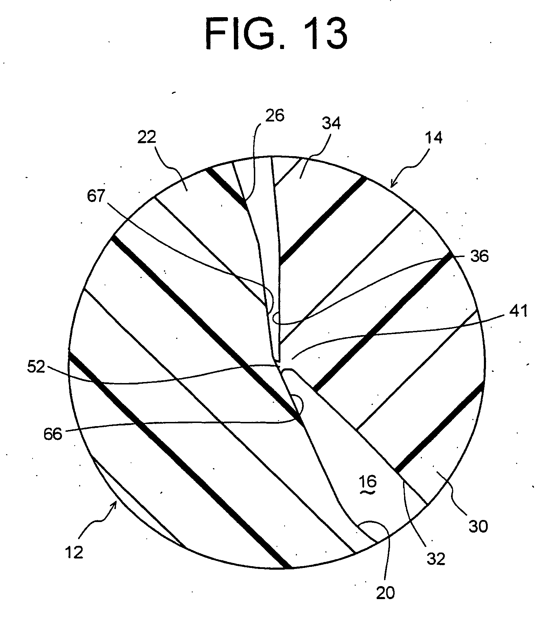

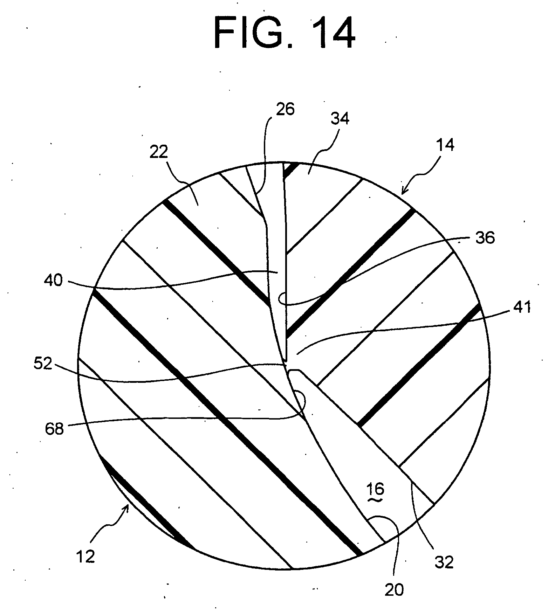

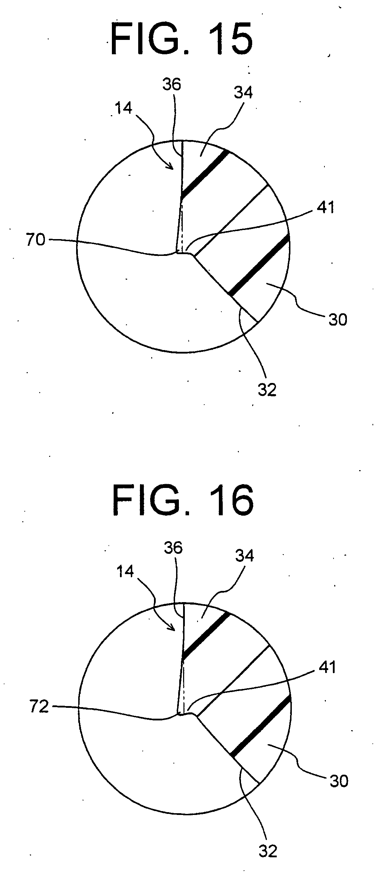

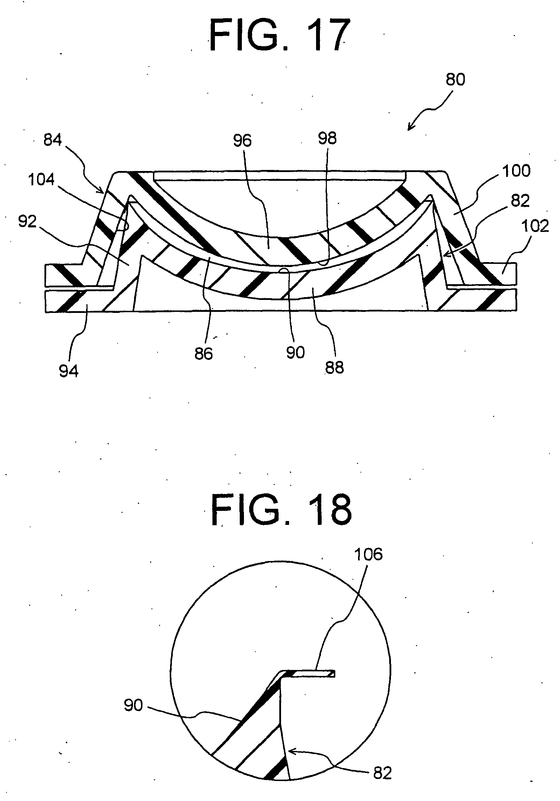

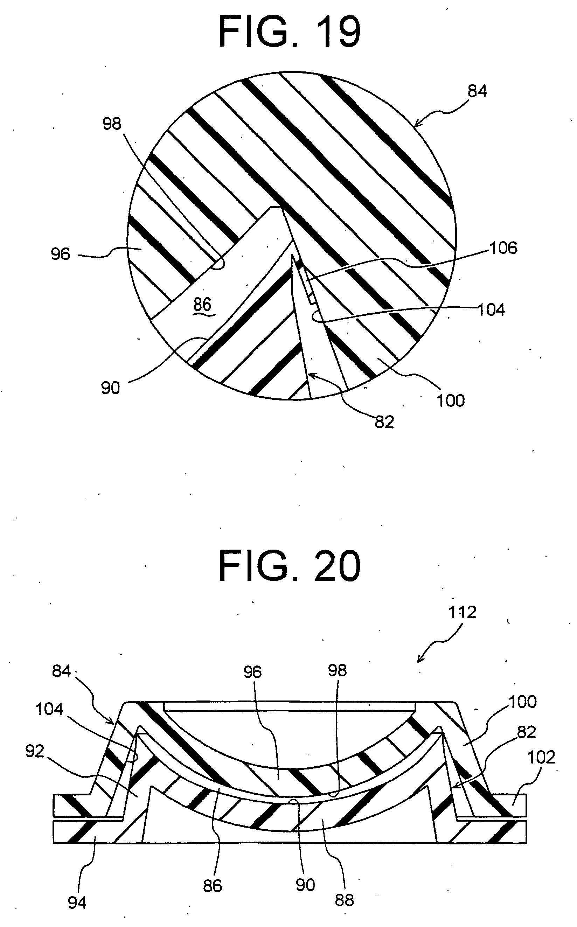

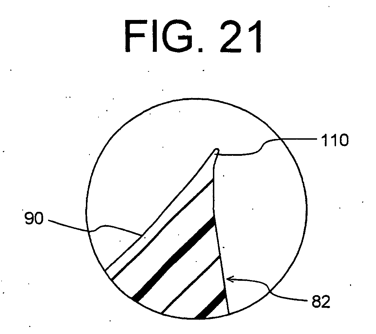

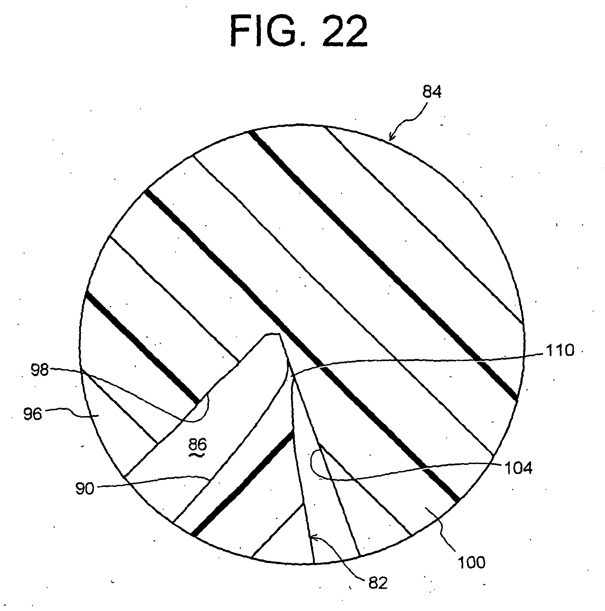

Fig. 1 is a vertical cross sectional view of a contact lens mold unit according to a first embodiment of the invention, wherein a male and a female mold are in a mated state. Fig. 2 is a fragmentary enlarged view of Fig. 1. Fig. 3 is a vertical cross sectional view of the male mold of the contact lens mold unit of Fig. 1. Fig. 4 is a fragmentary enlarged view of Fig. 3. Fig. 5 is a vertical cross sectional view of a contact lens mold unit according to a second embodiment of the invention, wherein a male and a female mold are in a mated state. Fig. 6 is a fragmentary enlarged view of Fig. 5. Fig. 7 is a vertical cross sectional view of the male mold of the contact lens mold unit of Fig. 5. Fig. 8 is a fragmentary enlarged view of Fig. 7. Fig. 9 is a fragmentary enlarged view in vertical cross section of a contact lens mold unit in the mated state according to yet another embodiment of the invention. Fig. 10 is a fragmentary enlarged view in vertical cross section of a principle portion of a male mold of a contact lens mold unit according to yet another embodiment of the invention. Fig. 11 is a fragmentary enlarged view in vertical cross section of a male mold of a contact lens mold unit according to yet another embodiment of the invention. Fig. 12 is a fragmentary enlarged view in vertical cross section of a male mold of a contact lens mold unit according to yet another embodiment of the invention. Fig. 13 is a fragmentary enlarged view in vertical cross section of a contact lens mold unit in the mated state according to yet another embodiment of the invention. Fig. 14 is a fragmentary enlarged view in vertical cross section of a contact lens mold unit in the mated state according to yet another embodiment of the invention. Fig. 15 is a fragmentary enlarged view in vertical cross section of a male mold of a contact lens mold unit according to yet another embodiment of the invention. Fig. 16 is a fragmentary enlarged view in vertical cross section of a male mold of a contact lens mold unit according to yet another embodiment of the invention. Fig. 17 is a fragmentary enlarged view of vertical cross section of a contact lens mold unit in the mated state according to yet another embodiment of the invention. Fig. 18 is a fragmental enlarged view in vertical cross section of a female mold of the contact lens mold unit of Fig. 17. Fig. 19 is a fragmentary enlarged view of a principle part of Fig. 17. Fig. 20 is a vertical cross sectional view of a contact lens mold unit in the mated state according to yet another embodiment of the invention. Fig. 21 is a fragmentary enlarged view of a female mold of the contact lens mold unit of Fig. 20. Fig. 22 is a fragmentary enlarged view of Fig. 20.

### BEST MODE FOR CARRYING OUT THE INVENTION

A further clarification of the invention is provided through the following detailed description of the embodiments, with reference to the accompanying drawings.

Referring first to Fig. 1, shown is a contact lens mold unit 10 according to a first embodiment of the invention. The mold unit 10 is composed of a female mold 12 and a male mold 14 which, when mated as shown in the drawing, form a contact lens mold cavity 16 between abutment surfaces of the female and male molds 12, 14.

More specifically, the female mold 12 is an integral molding of suitable resin material such as polypropylene. A central portion 18 of the female mold 12 has a spherical shell shape projecting in one of opposite axial direction thereof (downward in Fig. 1). The surface of the central portion 18 on the concave side constitutes a concave molding surface 20 of shape corresponding to a front curve of a desired contact lens.

A cylindrical wall 22 serving as a cylindrical fitting wall to be fitted outside, is formed at a peripheral edge of the central portion 18, projecting towards a center of curvature of the concave molding surface 20, i.e. upwardly in Fig. 1. An inner circumferential surface of the cylindrical wall 22 constitutes an inner fitting surface 24 of cylindrical inner circumferential surface configuration at a portion thereof of predetermined length rising in the axial direction from the outer peripheral edge of the concave molding surface 20. The inner circumferential surface of the cylindrical wall 22 further constitutes a fitting guide surface 26 of tapered cylindrical configuration increasing in size toward the open end at a large taper angle, at a portion thereof projecting further toward its open end from the inner fitting surface 24. In this embodiment, the inner fitting surface 24 is also endowed with a small taper angle increasing in size slightly towards the open end, whereby the inner fitting surface 24 constitutes a sloped abutment surface.

At an open edge of the cylindrical wall 22 is integrally formed a flat annular flange portion 28. This flange portion 28 is formed projecting outward in an axis-perpendicular direction, continuously about an entire circumference thereof. The flange portion 28 serves to provide overall rigidity of the cylindrical wall 22 and the central portion 18, and afford easy positioning of a center axial direction and horizontal direction in the concave molding surface 20 of the central portion 18. In the female mold 12, at least, the concave molding surface 20 has a thickness dimension, selected in consideration of its material, etc. so that the concave molding surface 20 produces adequate deformation resistance when subjected to external force during mating or the like.

On the other hand, the male mold 14, like the female mold 12, is fabricated of suitable resin material such as polypropylene, having in a central portion 30 thereof a spherical shell shape projecting in one of opposite axial directions (downward in Fig. 1). A surface of the central portion 30 on the convex side constitutes a convex molding surface 32 of shape corresponding to a base curve of the desired contact lens.

A cylindrical wall 34 serving as a cylindrical fitting wall to be fitted inside, is integrally formed at a peripheral edge of the central portion 30, projecting towards a center of curvature of the convex molding surface 32, i.e. upwardly in Fig. 1. An outer circumferential surface of the cylindrical wall 34 constitutes an outer fitting surface 36 of cylindrical outer circumferential surface configuration at a portion thereof of predetermined length rising in the axial direction from the peripheral edge of the convex molding surface 32. A flat annular flange portion 38 is integrally formed at an open end of the cylindrical wall 34. This flange portion 38 is formed projecting outward in the axis-perpendicular direction, continuously about an entire circumference thereof. This flange portion 38 serves to improve overall rigidity of the cylindrical wall 34 and the central portion 30, and affords easy positioning of a center axis direction and horizontal direction in the convex molding surface 32 of the central portion 30. Like the female mold 12, the male mold 14 has a thickness dimension selected in consideration of its material, etc., so that the convex molding surface 32 does not deform when subjected to force of mating or the like.

The central portion 30 of the male mold 14 is slightly smaller than the central portion 18 of the female mold 12, and the outside diameter dimension of the outer fitting surface 36 on the cylindrical wall 34 of the male mold 14 is smaller, by a predetermined amount, than the inside diameter dimension of the inner fitting surface 24 on the cylindrical wall 22 of the female mold 12. Thus, as shown in Figs. 1 and 2, the cylindrical wall 34 of the male mold 14 is fitted with the cylindrical wall 22 of the female mold 12 to mate the female and male molds 12, 14 with each other. With the female and male molds 12, 14 mated in this way, a slight gap 40 extending continuously along the circumference is formed between the diametrically opposed faces of the inner fitting surface 24 on the cylindrical wall 22 of the female mold 12 and the outer fitting surface 36 on the cylindrical wall 36 of the male mold 14.

Also formed on the male mold 14 is a shoulder portion 41 of curving or bending cross section wherein the peripheral edge of the convex molding surface 32 is convex on the center of curvature side of the convex molding surface 32, and extending all the way around in the circumferential direction. The peripheral edge of this shoulder portion 41 connects with the lower edge of the outer fitting surface 36 on the cylindrical wall 34. In this connecting portion is formed a fitting projection in the form of a thin-walled fin 42. As shown in Figs. 3 and 4, this thin-walled fin 42 has a thin, flat annular configuration, and is integrally formed with the male mold 14, extending perpendicular to the axis-perpendicular direction from an lower edge of the outer fitting surface 36. In order to form the lens edge to advantageous shape, as well as endowing the thin-walled fin 42 per se with both strength and flexural deformability, the thickness dimension of the thin-walled fin 42 is preferably set within the range of 0.005-0.05 mm. The projecting dimension of the thin-walled fin 42 is greater than the gap 40 formed between the inner fitting surface 24 and the outer fitting surface 36 with the female and male molds 12, 14 in the mated state. Preferably, the thin-walled fin 42 may have a projected height dimension at least twice the size of the gap 40.

When the female mold 12 and the male mold 14 are mated together, the thin-walled fin 42 formed on the male mold 14 comes into abutment with an inside surface of the cylindrical wall 22 of the female mold 12, i.e. with the fitting guide surface 26 and the inner fitting surface 24, thereby deflecting to one side in the axial direction towards the open end of the cylindrical wall 22, and bending along the fitting guide surface 26 and the inner fitting surface 24. Thus, as shown in Fig. 2, with the female mold 12 and the male mold 14 in the mated state, the thin-walled fin 42 deflects at its generally basal edge all the way around in the circumferential direction, while, due to the resilience of the thin-walled fin 42 per se, the thin-walled fin 42 is superposed on the inner fitting surface 24 of the female mold 12, in close contact therewith.

In the contact lens mold unit 10 having the structure described above, the thin-walled fin 42 projecting from the male mold 14 is resiliently held in intimate contact against the female mold 12 by mating the female and male molds 12, 14 together, whereby the gap 40 between the female and male molds 12, 14 is provided closure by the thin-walled fin 42. Thus, the outer peripheral edge of the mold cavity 16 formed between the opposite faces of the molding faces 20, 30 of the female and male molds 12, 14 is sealed off by the thin-walled fin 42.

Additionally, once deflection of the thin-walled fin 42 has been induced through application of a predetermined level of pressing force for effecting the mating of the female and male molds 12, 14, the resilience of the thin-walled fin 42 per se holds it pressed against the inner fitting surface 24 of the female mold 12. This makes it possible to exert effective mating and fixing force between the female and the male molds 12, 14.

The female mold 12 and the male mold 14 described hereinabove may be manufactured by resin molding processes known in the art. For instance, they may be advantageously formed by injection molding or the like, using mold units with forming cavities that give the outside shapes of the female mold 12 and the male mold 14.

When molding (polymerizing) a desired contact lens using a contact lens mold unit 10 composed of the female mold 12 and the male mold 14 like those described hereinabove, first, the female mold 12 is supported with its opening facing vertically upward so that the concave molding surface 20 of the central portion 18 thereof forms a "saucer" shaped area, into which is supplied a suitable polymerizable material for producing the desired contact lens. The polymerizable material may be selected from among the various liquid monomer compositions known in the art for use as materials for soft contact lenses or hard contact lenses. Typically, the liquid monomer composition includes one, or two or more, known art compounds capable of radical polymerization. Materials composed of macromers or prepolymers may be used as well. Such compounds may optionally be combined with suitable crosslinking agents, polymerization initiators, e.g. thermal polymerization initiators or photopolymerization initiators, sensitizers, or other additives, thereby being prepared as a liquid monomer composition.

Next, with the male mold 14 aligned coaxially with the female mold 12, the male mold 14 is superposed on the female mold 12 from the above. This superposition of the female and male molds 12, 14 is accomplished by fitting the cylindrical wall 34 of the male mold 14 along the fitting guide surface 26 of the female mold 12 in the axial direction and applying the predetermined level of pressing force in the axial direction across the female mold 12 and the male mold 14. As a result, the outer fitting surface 36 of the male mold 14 is mated with the inner fitting surface 24 of the female mold 12, so that the convex molding surface 32 of the male mold 14 is juxtaposed to the concave molding surface 20 of the female mold 12.

With the female and male molds 12, 14 superposed in this way, the relative positional relationship of the female and male molds 12, 14 in the axial direction is set, for example, by inserting a spacer of suitable thickness between the axially opposed faces of the flange portions 28, 38 of the female and male molds 12, 14.

By axially superposing the female and male molds 12, 14, and by axially applying to the female and male molds 12, 14 the predetermined level of pressing force (mold claming force) so as to set the relative positional relationship of the female and male molds 12, 14, it is possible, as mentioned previously, to provide the gap 40 between the inner and outer fitting faces 24, 36 with closure by means of thin-walled fin 42, and to mate and fix the female and male molds 12, 14 by means of thin-walled fin 42.

With the opposing concave and convex molding surfaces 20, 32 of the female and male molds 12, 14 juxtaposed in this way, there is formed the mold cavity 16 of shape corresponding to the desired contact lens. The polymerizable material that has been supplied to the concave molding surface 20 of the female mold 12 is squeezed out towards the peripheral portion between the female and male molds 12, 14 so as to spread throughout and fill the entire mold cavity 16. Any excess polymerizable material is directed out from the mold cavity 16 through the gap 40 between the female and male molds 12, 14.

Next, with the female and male molds 12, 14 maintained in the mated state, and with or without releasing the force of mating, a polymerization process is carried out on the polymerizable material filling the mold cavity 16. Polymerization of polymerizable material in the form of a liquid monomer composition may be carried out, for example, through ordinary thermal polymerization methods or ordinary photopolymerization methods. Where the latter photopolymerization method is employed, it will be necessary to expose the polymerizable material to UV or other light source, and thus at least one of the female and male molds 12, 14 will need to be fabricated of material capable of transmitting light, preferably a highly transparent material, so that the polymerizable material can be polymerized with light entering through the mold.

By polymerizing polymerizable material in the mold cavity 16 in this way, there is formed the desired contact lens of shape corresponding to the shapes of the concave and convex molding surfaces 20, 32 of the female and male molds 12, 14. Subsequently, the female and male molds 12, 14 are parted, and the contact lens adhering to the molding surface 20, 32 of either the female or male mold 12, 14 is released and removed from the mold, completing manufacture of the contact lens.

The use of the contact lens mold unit 10 according to the embodiment hereinabove makes it possible to provide consistent closure to the peripheral portion of the mold cavity 16 during mating of the female and male molds 12, 14, thereby enabling the desired mold cavity 16 to be formed with a high degree of precision, as well as to generate the mating and fixing force for maintaining the female and male molds 12, 14 in the mated state, in efficient and consistent manner. Therefore, the desired contact lens can be manufactured with a high degree of dimensional precision and consistently operability.

Referring next to Figs. 5-8, shown is a contact lens mold unit 50 according to a second embodiment of the invention. Since this embodiment shows another specific example of the fitting projection of the male mold, the same reference numerals as used in the contact lens mold unit 10 of the first embodiment will be used in Figs. 5-8 to identify the structurally corresponding parts and elements, and detailed description of these parts and elements will not be provided.

In the contact lens mold unit 50, instead of the thin-walled fin 42 (see Fig. 3) of the first embodiment, an annular projection 52 is formed on the lower edge of the outer fitting surface 36 of the male mold 14. This annular projection 52 is fixedly disposed at the rising edge portion of the cylindrical wall 34, i.e. the peripheral edge of shoulder portion 41 of cylindrical wall 34 as the inner fitting wall situated at the outer peripheral edge of the convex molding surface 32 of male mold 14. In this embodiment, the annular projection 52 does not project diametrically outward from the rising edge portion of the cylindrical wall 34, and is of annular shape having a peak-shaped cross section projecting downward in the axial direction, and with a substantially constant cross section extending continuously all the way around in the circumferential direction.

The annular projection 52 may be integrally formed with the male mold 14, and it is favorably formed of material that more readily undergoes plastic deformation than do the male and female molds 14, 12. Such an annular projection 52 fabricated of different material can be formed approximately simultaneously with forming of the male mold 14, by means of two-color molding technology, for example.

The annular projection 52 has an outer circumferential surface formed by axially downward linear extension of the outer fitting surface 36 of the male mold 14. The outside diameter dimension of the annular projection 52 is larger than the minimum inside diameter dimension of the female mold 12.

Since the contact lens mold unit 50 of the present embodiment is designed as described above, the annular projection 52 of the female mold 14 comes into abutment with an sloped abutment surface, i.e., the inner fitting surface 24 of the female mold 12 upon mating of the female and male molds 12, 14 as shown in Fig. 6. The annular projection 52 undergoes gradual compressive deformation as it goes towards a bottom end of the inner fitting surface 24, while being dragged towards an open end of the inner fitting surface 24 due to frictional force against the inner fitting surface 24. As a result, the peripheral edge portion of the mold cavity 16 becomes closed off by the deformed annular projection 52, thus forming the desired sealed mold cavity 16, and filling the gap 40 between the inner and outer fitting surfaces 24, 36 of the female and male molds 12, 14.

Thus, the contact lens mold unit 50 of the present embodiment is able to effectively establish consistent mating when mating the female and male molds 12, 14 with each other, and to form the desired sealed mold cavity 16 in consistent fashion, like in the first embodiment. Therefore, the desired contact lens can be manufactured consistently with a high degree of dimensional precision.

While the invention has been described in detail with its embodiments by illustrative purpose only, it is to be understood that the invention is not limited to the details of the illustrated embodiments.

For instance, when employing the male mold 14 having the thin-walled fin 42 as described in the first embodiment, the sloped abutment surface 56 of the female mold 12 may be formed with a bowed tapered cross section that gradually constricts in diameter towards the bottom end of the sloped abutment surface 56, as shown in Fig. 9. The sloped abutment surface 56 having such a bowed tapered cross section affords the same advantages as the first embodiment.

Further, as shown in Figs. 10 and 11 for example, a sloped thin-walled fin 60, 62 that slopes rearward in the mating direction with respect to the female mold 12 may be employed as the thin-walled fin formed on the male mold 14. Alternatively as shown in Fig. 12, there may be employed a bowed sloped fin 64 that slopes rearward in the mating direction with respect to the female mold 12, while having a bowed cross section. The use of such sloped thin-walled fins 60, 62, 64 makes it possible to achieve smoother bending like flexural deformation into the gap between the fitting surfaces of the female and male molds 12, 14 when the female and male molds 12, 14 are mated.

When employing a male mold having the annular projection 52 like that described in the second embodiment, the sloped abutment surface of the female mold 12 abutted by the annular projection 52 may have a tapered sloped surface 66 with a relatively large slope angle, as shown in Fig. 13. Alternatively, it is possible to make the annular projection 52 a bowed sloped surface 68 having a bowed cross section constricting in diameter towards its bottom end, as shown in Fig. 14. The use of such a tapered sloped surface 66 or bowed sloped surface 68 makes it possible to more effectively produce abutment force of annular projection 52 against the abutment surface during mating. In the female mold 12 shown in Fig. 13, there is provided a fitting guide surface 67 that is continuous with the open end of the tapered sloped surface 66 and that increases in size moving outward in the axial direction, for guiding the male mold 14 during mating.

Alternatively, an annular projection 70, 72 that projects diametrically outward beyond the outer fitting surface of the male mold 14, as shown in Figs. 15 and 16, may be employed as the annular projection of the male mold 14, for example. In particular, where such an annular projection 70, 72 of diametrically projecting type is employed, abutting force of the annular projection 52 against the abutment surface of the female mold 12 can be produced more effectively, making it possible to produce mating and fixing force of the female and male molds 12, 14 more effectively.

The annular projection 70, 72 may be formed on the outer fitting surface 36 of the male mold 14 with the state shown in Figs. 15 and 16. Namely, the annular projection 70, 72 projects diametrically outward from a connecting edge portion of an outer peripheral portion of the central portion 30 providing the convex molding surface 32 and the outer fitting surface 26 of the cylindrical wall 34, while having a tapered outer peripheral surface that gradually decreases in height moving upward in the axial direction of the cylindrical wall 34. In this case, for example, the male mold 14 may be fabricated of synthetic resin material, whereby the annular projection 70, 72 may be formed by utilizing molding shrinkage of the male mold 14 in the cylindrical wall 34. Specifically, the molding shrinkage that accompanies deformation in the diametrical direction tends to be higher in the axial central portion of the cylindrical wall 34 than at the lower axial end portion of the cylindrical wall 34, which is constrained by the central portion 30. Therefore, by utilizing this molding shrinkage, it is possible to form the desired annular projection 70, 72 fairly easily, while avoiding an undercut shape in the mold unit.

In the embodiments described hereinabove, the cylindrical wall 22 is formed as the cylindrical fitting wall to be fitted outside on the female mole 12 having the concave molding surface 20, and the cylindrical wall 34 is formed as the cylindrical fitting wall to be fitted inside on the male mold 14 having the convex molding surface 32, with the thin-walled fin 42 or annular projection 52 formed as the fitting projection in a corner at the boundary of the convex molding surface 32 and the cylindrical wall 34 of the male mold 14. Contrary to this, it would be possible to dispose the cylindrical fitting wall to be fitted inside on the female mold 12 and to dispose the cylindrical fitting wall to be fitted outside on male mold 14, thus forming the fitting projection on the female mold 12.

Specifically, Figs. 17-19 show a contact lens mold unit 80 according to a yet another embodiment of the invention. The contact lens mold unit 80 includes a female mold 82 and a male mold 84. When these molds 80, 82 are mated with each other, a contact lens mold cavity 86 is formed between abutment surfaces of the female and male molds 82, 84 as depicted in the drawings.

The female mold 82 has in its central portion 88 a spherical shell shape projection in one of opposite axial directions (downward in the drawings). The surface of the central portion 88 on the concave side constitutes a concave molding surface 90 of shape corresponding to a front curve of a desired contact lens. A cylindrical wall 92 serving as the cylindrical fitting walls to be fitted inside, is integrally formed at a peripheral edge of the central portion 88, projecting towards the side opposite a center of curvature of concave molding surface 90, i.e. downwardly in the drawings. This cylindrical wall 92 has the form of a tapered cylinder increasing in size downward in the axial direction, and extends axially downward beyond the central portion 88, with a diametrically outward spreading flange 94 being integrally formed at the lower open edge portion thereof.

The male mold 84 has in its central portion 96 a spherical shall shape projection in one of opposite axial directions (upward in the drawings). The surface of the central portion 96 on the convex side consists a convex molding surface 98 of shape corresponding to a base curve of the desired contact lens. A cylindrical wall 100 serving as the cylindrical fitting wall to be fitted outside, is integrally formed at a peripheral edge of the central portion 96, projecting towards the side opposite a center of curvature of convex molding surface 98, i.e. downwardly as seen in the drawings. This cylindrical wall 100 has the form of a tapered cylinder increasing in size downward the in the axial direction, and extends axially downward beyond the central portion 96, with a diametrically outward spreading flange 102 being integrally formed at the lower open edge portion thereof.

An inner circumferential surface 104 of the cylindrical wall 100 of the male mold 84 has a larger taper angle than does the outer circumferential surface of the cylindrical wall 92 of the female mold 82. The inside diameter dimension of the inner circumferential surface 104 is made slightly small at its small diameter end portion, and is made large at its large-diameter end portion. With this design, the inner circumferential surface 104 of the cylindrical wall 100 of the male mold 84 serves as a fitting guide surface, as shown in Fig. 17. When mating the female and male molds 82, 84, the small-diameter end portion of the cylindrical wall 92 of the female mold 82 is brought to the desired mating location, guided by the inner circumferential surface 104 of the cylindrical wall 100 of the male mold 84.

Fig. 18 shows a fragmentary view depicting the female mold 82 only. A thin-walled fin 106 is formed as a fitting projection on the small-diameter end portion of the cylindrical wall 92 of the female mold 82. This thin-walled fin 106 has a thin, flat annular shape similar to the thin-walled fin integrally formed on the male mold in the first embodiment. The thin-walled fin 106 is integrally formed with the female mold 82 so as to extend approximately perpendicular to the axial direction from a distal end of the sharp-peaked corner portion that constitutes a connecting portion between the peripheral edge of the concave molding surface 90 and the small-diameter end of the outer circumferential surface of the cylindrical wall 100.

In the contact lens mold unit 80 of the present embodiment, when the female mold 82 and the male mold 84 are mated, the thin-walled fin 106 projecting from the female mold 82 comes into abutment with the inner circumferential surface 104 of the cylindrical wall 100 of the male mold 84, as shown in Fig. 19. The thin-walled fin 106 undergoes flexural deformation towards an open-end side of the cylindrical wall 92, and is held in close contact with the inner circumferential surface 104 of the cylindrical wall 100 of the male mold 84, due to a resilience of the thin-walled fin 106 per se. Thus, the mold cavity 86 between the opposing faces of the molding surfaces 90, 98 of the female and male molds 82, 84 is closed off by means of the thin-walled fin 106, forming the sealed mold cavity 86 of a shape corresponding to the desired contact lens.

Alternatively, it would be possible to employ an annular projection like that used in the second embodiment, instead of the thin-walled fin employed in the embodiment illustrated in Figs. 17-19. One such embodiment is shown in Figs. 20-22. In Figs. 20-22, the same reference numerals as used in the contact lens mold unit shown in Figs. 17-19 will be used in Figs. 20-22 to identify the structurally corresponding parts and elements, and detailed description of these parts and elements will not be provided.

As is apparent from Fig. 21, an annular projection 110 is integrally formed with the male mold 82 with a configuration of an annular body with a protruding cross section extending continuously all the way around in the circumferential direction, projecting in the axial and axial-perpendicular directions from a distal edge of the sharp-peaked corner portion that constitutes a connecting portion between the peripheral edge of concave molding surface 90 of the female mold 82 and the small-diameter end of the outer circumferential surface of the cylindrical wall 100.

Since the contact lens mold unit 112 of this embodiment is provided with the annular projection 110, when the female mold 82 and the male mold 84 are mated as shown in Fig. 22, the annular projection 110 projecting from the female mold 84 comes into abutment with the inner circumferential surface 104 of the cylindrical wall 100 of the male mold 84, and undergoes compressive deformation, thus being superposed on and held in close contact with the inner circumferential surface 104 of the cylindrical wall 100 of the male mold 84. Accordingly, the mold cavity 86 formed between the opposing surfaces of the forming faces 90, 98 of the female and male molds 82, 84 is closed off by the compressed annular projection 110, thereby forming a sealed mold cavity 86 of a shape corresponding to the desired contact lens.

While the invention has been described in detail with its embodiments by illustrative purpose only, it is to be understood that the invention is not limited to the details of the illustrated embodiments.

For instance, where a thin-walled fin is employed, the thickness dimension of the thin-walled fin can be varied so as to be thinner towards the outer peripheral side.

Also, the thin-walled fin may be affixed to and formed on the male mold 14, by adhering a thin resin sheet or the like to the convex molding surface 32 of the male mold 14 and the drawing the peripheral edge of the thin resin sheet diametrically outward from the peripheral edge of the convex molding surface 32.

Alternatively, a plurality of annular projections 52 each of annular configuration extending in the circumferential direction may be formed from the peripheral edge of the convex molding surface 32 of the male mold 14 to the lower edge of the outer fitting surface 36.

Further, an annular projection may be formed on the inner fitting surface 24 of the female mold 12 so that the annular projection 52 projecting from the male mold 14 is brought into abutment with the annular projection.

While not enumerated here, it will be understood that the invention may be embodied with various other changes, modifications and improvements, which may occur to those skilled in the art, without departing from the spirit and scope of the invention defined in the following claims.

### INDUSTRIAL APPLICABILITY

In a contact lens mold unit of structure according to the invention, as is apparent from the description hereinabove, a fitting projection projecting from one mated mold comes into abutment with the other mold to be deformed thereby, so that the peripheral portion of the mold cavity is provided closure by means of the fitting projection, while at the same time the gap between the fitting walls of the female and male molds is filled by means of the fitting projection, to thereby provide mating and fixing force to the female and male molds. This makes it possible to consistently mold the desired contact lens with a high degree of precision.

According to the contact lens manufacturing method of the invention, the fitting projection projecting from one mold is brought into abutment with the other mold to be deformed thereby, by mating the female and male molds to each other. This makes it possible to consistently provide closure between the fitting faces at the peripheral portion of the mold cavity, and to maintain the female and male molds in the mated state under effective mating and fixing force, thus enabling consistent molding of the desired contact lens with a high degree of precision.

## Claims

1. A contact lens mold unit comprising: a female mold with a concave molding surface; a male mold with a convex molding surface, the female and male molds cooperating to form a contact lens mold cavity between abutment surfaces thereof; and cylindrical fitting walls formed at a peripheral portion of the convex molding surface of the male mold and a peripheral portion of the concave molding surface of the female mold, respectively, both extending towards one side in an axial direction, the cylindrical fitting walls being fitted together with a gap therebetween in a diametric direction when the male and female molds are mated, wherein one of the male and female molds whose cylindrical fitting wall fitted inside is provided at a peripheral edge of the convex or concave molding surface thereof with a fitting projection that projects out and extends continuously about an entire circumference thereof so that, when mating the male and female molds, the fitting projection comes into abutment with a peripheral side of the convex or concave molding surface of an other one of the male mold and the female mold whose cylindrical fitting wall fitted outside, and undergoes deformation due to force of mating, and so that a peripheral portion of the mold cavity is sealed off by the fitting projection, and the gap in the diametric direction between the cylindrical fitting walls fitted inside and outside is filled by the fitting projection, in order to produce mating and fixing force exerted on the male and female molds.

2. A contact lens mold unit according to claim 1, wherein the fitting projection comprises a thin-walled fin of flat annular form that extends outwardly from a rising edge portion of the cylindrical fitting wall fitted inside at the outer peripheral edge of the convex molding surface of the male mold or concave molding surface of the female mold, the thin-walled fin, when the male and female molds are mated, deflecting rearward in a mating direction of both molds towards an opposing side of the mold cavity and being pressed in close contact with an inner circumferential surface of the cylindrical fitting wall that is fitted outside.

3. A contact lens mold unit according to claim 2, wherein the thin-walled fin projects sloping rearward in a fitting direction of the cylindrical fitting walls of the male and female molds.

4. A contact lens mold unit according to claim 2 or 3, wherein the male or female mold provided with the thin-walled fin is formed by combining a plurality of combination molds, with mold parting faces of the plurality of combination molds disposed at a distal end portion of the thin-walled fin in a direction in which the thin-walled fin projects so that the convex or concave molding surface of the male or female mold with the thin-walled fin is constituted by one of the combination molds.

5. A contact lens mold unit according to any one of claims 2-4, wherein the male or female mold provided with the thin-walled fin is fabricated of synthetic resin material, and a thickness dimension of the thin-walled fin is held within a range of 0.005-0.05 mm.

6. A contact lens mold unit according to claim 1, wherein the fitting projection comprises a sharp-angled projecting distal edge that projects in the axial direction and/or outward in the diametrical direction from a rising edge portion of the cylindrical fitting wall fitted inside at the outer peripheral edge of the convex molding surface of the male mold or concave molding surface of the female mold, and the cylindrical fitting wall fitted outside is provided at an inner circumferential surface thereof with a sloped abutment surface, the projecting distal edge coming into abutment with the sloped abutment surface when mating the male and female molds and being deformed in close contact with the sloped abutment surface through the mating and fixing forced.

7. A contact lens mold unit according to any one of claims 1-6, wherein the peripheral portion of the convex molding surface constituting a lens edge molding surface is provided with a shoulder portion that is convex towards a side at which a radius of curvature of the convex molding surface is situated, and wherein the fitting projection is formed on a corner of the shoulder portion.

8. A contact lens mold unit according to any one of claims 1-7, wherein a gap of 0-0.1 mm in the diametric direction is formed between the cylindrical fitting wall fitted inside and the cylindrical fitting wall fitted outside, with the male mold and the female mold held in the mated state for forming the mold cavity for the object contact lens.

9. A contact lens molding unit according to any one of claims 1-8, wherein an inner circumferential surface of the cylindrical fitting wall that is fitted outside when the male and female molds are mated, has a tapered cylindrical sloped surface at least in an area thereof into which the fitting projection comes into abutment at the outer peripheral portion of the convex or concave molding surface, the tapered cylindrical sloped surface constricting in diameter gradually towards the molding surface.

10. A contact lens mold unit according to any one of claims 1-9, wherein the cylindrical fitting wall that is fitted outside when the male and female molds are mated, expands in size at an open end portion of the inner circumferential surface thereof towards the opening to form a fitting guide surface for guiding the cylindrical fitting wall fitted inside when the male and female molds are mated in the mated direction.

11. A contact lens mold unit according to any one of claims 1-10, wherein the cylindrical fitting wall that is fitted outside when the male and female molds are mated, and the fitting projection brought into abutment with the cylindrical fitting wall are fabricated of mutually different materials.

12. A method of manufacturing a contact lens using a contact lens mold unit constructed according to the invention set forth any one of claims 1-11, wherein the contact lens is manufactured by mating the male mold and the female mold and polymerizing a predetermined polymerizable material filling the mold cavity formed between the abutment surfaces of the male and female molds, the method comprising the following step:
mating the male mold and female mold so that the fitting projection projected from the cylindrical fitting wall fitted inside is caused to deform by being pressed against the cylindrical fitting wall fitted outside, thereby providing closure in the peripheral portion of the mold cavity, filling the diametrical gap between the fitting wall fitted inside and the fitting wall fitted outside, and exerting mating and fixing force on the male and female molds.

13. A method of manufacturing contact lens according to claim 12, wherein the step of mating the male and female mold is executed with the force of mating of 1 N -300 N.
